(19)

Europäisches Patentamt

European Patent Office

Office européen des brevets

(11) **EP 2 787 561 A1**

(12) **EUROPEAN PATENT APPLICATION**
published in accordance with Art. 153(4) EPC

(43) Date of publication:
**08.10.2014 Bulletin 2014/41**

(21) Application number: **11876415.8**

(22) Date of filing: **08.12.2011**

(51) Int Cl.:
***H01M 2/16*** (2006.01)

(86) International application number:
**PCT/KR2011/009468**

(87) International publication number:
**WO 2013/081228 (06.06.2013 Gazette 2013/23)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.11.2011   KR 20110126752**

(71) Applicant: **The Republic Of Korea (Forestry Administration Forestry Research Institute) Seoul 130-712 (KR)**

(72) Inventors:
• **LEE, Sun Young Seoul 122-957 (KR)**

• **LEE, Sang Young Chuncheon-si Gangwon-do 200-767 (KR)**
• **CHUN, Sang Jin Namyangju-si Gyeonggi-do 472-785 (KR)**
• **DOH, Geum Hyun Seoul 139-760 (KR)**

(74) Representative: **Cabinet Plasseraud 52, rue de la Victoire 75440 Paris Cedex 09 (FR)**

(54) **POROUS SEPARATOR FOR A SECONDARY BATTERY INCLUDING CELLULOSE NANOFIBERS AND METHOD FOR MANUFACTURING SAME**

(57)    The present invention relates to a separator for secondary battery including cellulose nanofibers, and to a method for fabricating the same. The separator has a porous structure of micropores formed between the cellulose nanofibers. The porous structure has a porosity of 10 to 80 % (v/v) and a pore size of 0.01 to 10 $\mu$m. The separator has a thickness of 5 to 30 $\mu$m. The separator has good properties in regards to thermal stability, dimensional stability, wettability, and electrochemical stability, and the fabrication process can be simplified to reduce the production cost.

FIG. 2

EP 2 787 561 A1

## Description

### TECHNICAL FIELD

The present invention relates to aporous separator for secondary battery including cellulose nanofibers and a method for fabricating the same.

### BACKGROUND ART

The use of secondary batteries has been greatly expanded in the fields of electronics, such as computers, smart phones, or digital cameras, automobiles, such as smart cars or hybrid electric vehicles, and energy storage applications. Such applications require high energy density, high electric power density, and high performance like stability of batteries. In particular, the separator functions as a membrane that keeps anode and cathode apart in a secondary battery to prevent short circuits by preventing electronic conduction while allowing the transport of ionic charge carriers between the two electrodes. The separator for secondary battery, having a function of physical insulation, is in charge of main function in the stability of the battery.

The separator in general use is made of a polyolefin-based polymer, such as polypropylene or polyethylene. Such separators using a polyolefin-based polymer are, however, poor in thermal stability, porosity, and wettability with an electrolyte.

There have been made some studies on an alternative substance to cope with the problems with the separators using a polyolefin-based polymer. Those studies involve, for example, a method of adding an inorganic powder, such as alumina or silica, as a reinforcing material to a polyethylene terephthalate (PET) nonwoven fabric; a method for fabricating a wet nonwoven fabric using polyphenylene terephthalate (PPTA); and a method for fabricating a nanofiber nonwoven fabric using the electrospinning technique. But, these methods have a downside in regards to an unacceptably wide pore size distribution that possibly leads to self-discharge and internal short circuit.

### SUMMARY OF THE INVENTION

#### 1. Technical Problem

Accordingly, the present invention is to provide a separator including cellulose nanofibers, a fabrication method for the same, and a secondary battery including the separator.

#### 2. Technical Solution

In accordance with one embodiment of the present invention, there are provided a separator for secondary battery that includes cellulose nanofibers and shows an air permeability of 10 to 1,000 sec/100cc·air, and a secondary battery including the separator.

In accordance with another embodiment of the present invention, there is provided a method for fabricating a separator for secondary battery that includes: preparing a sheet using cellulose nanofibers and a solution containing an organic solvent or a mixture of water and an organic solvent; and eliminating the organic solvent from the sheet to form micropores.

#### 3. Effect of the Invention

The separator for secondary battery including cellulose nanofibers and the method for fabricating the same according to the present invention not only provide an approach to the preparation of a separator excellent in thermal stability, dimensional stability, wettability, and electrochemical stability but also simplify the fabrication process to reduce the production cost.

### BRIEF DESCRIPTION OF DRAWINGS

FIG. 1a is a scanning electron microscope (SEM) image showing a separator for secondary battery according to one embodiment of the present invention.
FIG. 1b is an SEM image of a celgard 2320 PP/PE/PP separator.
FIG. 2 is a more enlarged SEM image of the separator for secondary battery according to the one embodiment of the present invention.

FIG. 3 is an image showing the experimental results evaluating the thermal stability of a separator for secondary battery according to another embodiment of the present invention.

FIG. 4 is a graph showing the experimental results evaluating the electrochemical stability of a separator for secondary battery according to still another embodiment of the present invention.

FIG. 5 is an image showing a comparison between a separator for secondary battery according to one embodiment of the present invention and a celgard 2320 PP/PE/PP separator in regards to the wettability with a polar electrolyte.

FIG. 6 is a graph showing a comparison between a separator for secondary battery according to one embodiment of the present invention and a celgard 2320 PP/PE/PP separator in regards to the low-voltage characteristic (open circuit voltage drop).

FIG. 7 is a graph showing a comparison between a separator for secondary battery according to one embodiment of the present invention and a celgard 2320 PP/PE/PP separator in regards to the change of discharge capacity as a function of the change of current density.

FIG. 8a is a graph showing the change of discharge capacity as a function of the change of current density in a separator for secondary battery according to Comparative Example 1.

FIG. 8b is a graph showing the change of discharge capacity as a function of the change of current density in a separator for secondary battery according to Example 1.

## DESCRIPTION

The separator for secondary battery according to one embodiment of the present invention may include cellulose nanofibers. Cellulose, which is one of the biopolymer materials most abundant in the Earth, is recyclable and advantageously has high tensile strength, low density and high biodegradability. Further, cellulose nanofibers are characterized by high surface area and high aspect ratio (L/D).

The separator may have an air permeability (Curley value) in the range of 10 to 1,000 s/100cc·air. For example, the air permeability (Curley value) may be 1,000 s/100cc·air or less, 10 to 1,000 s/100cc·air, 100 to 800 s/100cc·air, or 450 to 700 s/100cc·air. In the present invention, the air permeability (Gurley value) is defined as an index of air permeability for membrane and determined according to the standards of Gurley air permeability (JIS P8117). It is generally considered that the air permeability becomes better with a decrease in the Gurley value. The air permeability (Gurley value) can be explained according to the following Equation 1.

[Equation 1]

$$tG = K \cdot (\tau^2 \cdot L)/(\epsilon \cdot d)$$

In the equation, tG is the air permeability (Gurley value); K is a proportional constant; $\tau$ is a curved path rate (i.e., an average value obtained by dividing the length of a curved path by the thickness of the membrane); L is the thickness of the membrane; $\epsilon$ is the porosity; and d is the average pore diameter.

It can be seen from the Equation 1 that the separator preferably has a low membrane thickness, a high porosity and a high average pore diameter in order to show a high air permeability.

In one embodiment of the present invention, the separator for secondary battery may include a porous structure of micropores formed between the cellulose nanofibers.

For example, the porous structure may have a porosity of 10 to 80 % (v/v), 10 to 50 % (v/v), 25 to 50 % (v/v), or 25 to 50 % (v/v). The porosity of the above-defined range can leads to acquiring good air permeability and high physical strengths.

Further, the pore size of the porous structure may be in the range of 0.01 to 10 $\mu$m; or under circumstances, 0.01 to 8 $\mu$m, 0.1 to 10 $\mu$m, or 0.1 to 8 $\mu$m. The pore size is properly determined to form a porous structure securing good air permeability. An extremely large pore size possibly results in a deterioration of physical strengths.

The thickness of the separator may be in the range of 5 to 30 $\mu$m. For example, the separator may have an average thickness of 5 to 30 $\mu$m, 5 to 20 $\mu$m, 5 to 15 $\mu$m, or 15 to 20 $\mu$m. The separator according to the present invention is characterized by a low average thickness, which is less than the average thickness of the conventional separators for secondary battery including cellulose. The thickness of the separator is properly determined to secure high physical strengths and prevent a deterioration in the stability of the battery. Further, an extremely high thickness of the separator leads to the higher resistance of the separator and the lower air permeability, thereby dropping the efficiency of the battery.

The size of the cellulose nanofibers according to the present invention is not specifically limited. In one embodiment of the present invention, the average diameter of the cellulose nanofibers may be in the range of 10 to 100 nm. For example, the cellulose nanofibers may have an average diameter in the range of 10 to 80 nm, 30 to 100 nm, 20 to 80 nm, or 20 to 60 nm. Such a diameter range of the cellulose nanofibers is properly determined to form pores in a sufficiently large size and offer a uniform surface. For example, an extremely large average diameter of the cellulose nanofibers possibly renders the surface of the separator not uniform and results in low strengths.

In one embodiment of the present invention, the separator for secondary battery according to the present invention may have an ion conductivity in the range of 0.01 to 10 mS/cm while immersed in an electrolyte containing a lithium salt and a carbonate-based solvent. For example, the ion conductivity of the separator may be in the range of 0.01 to 8 mS/cm, 0.1 to 5 mS/cm, 0.1 to 1 mS/cm, 0.5 to 1 mS/cm, or 0.6 to 0.8 mS/cm. Compared to the conventional separators commercially available, the separator of the present invention may acquire more excellent ion conductivity. The carbonate-based electrolyte is not specifically limited and may include at least one selected from ethylene carbonate, propylene carbonate, dimethyl carbonate, ethylmethyl carbonate, and diethyl carbonate. For example, the ion conductivity may be a measurement value obtained by immersing the separator in an electrolyte prepared by adding one mole of a lithium salt ($LiPF_6$) to a mixture of ethylene carbonate and dimethyl carbonate at a mixing ratio of 1:1.

The present invention further provides a method for fabricating the aforementioned separator for secondary battery.

In accordance with one embodiment, the fabrication method may include: preparing a sheet using cellulose nanofibers and a solution containing an organic solvent or a mixture of water and an organic solvent; and eliminating the organic solvent from the sheet to form micropores.

The fabrication method uses an organic solvent or a mixture of water and an organic solvent as a dispersion solvent for dispersing the cellulose nanofibers. By controlling the mixed ratio of the dispersion solvent, it is possible to adjust the porosity and thickness of the separator using the cellulose nanofibers. For example, the mixing ratio of an organic solvent to water may be in the range of 50:50 (v/v) to 100:0 (v/v). In this regard, the mixing ratio of an organic solvent to water being 100:0 (v/v) means that the organic solvent is used alone. Therefore, the present invention includes controlling the mixing ratio of an organic solvent to water within the above-defined range or using an organic solvent alone without water.

The organic solvent is not specifically limited so long as it allows a uniform dispersion of the cellulose nanofibers and does not dissolve the cellulose nanofibers in the course of preparing a suspension containing the cellulose nanofibers. The organic solvent may include at least one selected from, for example, methyl alcohol, ethyl alcohol, propyl alcohol, acetone, ethylacetate, methylethyleketone, toluene, and heptane. The organic solvent may be isopropyl alcohol. In this case, the cellulose nanofibers are dispersed in isopropyl alcohol alone or a mixture of water and isopropyl alcohol to prepare a sheet.

The process of preparing a sheet may include passing cellulose nanofibers and a solution containing an organic solvent or a mixture of water and an organic solvent through a homogenizer to prepare a suspension and then conducting decompression of the suspension to form a sheet.

The sheet thus obtained has strong hydrogen bonds between the nanofibers and shows high tensile strength. The frequency of passing the suspension through the homogenizer may be at least 8 cycles. For example, the frequency of passing the suspension through the homogenizer may be 8 to 20 cycles, 10 to 15 cycles, or 12 cycles. The cellulose nanofibers can be more uniformly distributed in the dispersion solution with an increase in the frequency of passing the suspension containing the cellulose nanofibers through the homogenizer. More specifically, the process of passing the suspension through the homogenizer imposes high shear force and impact to the cellulose nanofiber bundles. Then, the high pressure is reduced to the atmospheric pressure, so the mechanical force makes the nanofibers of a defined size uniformly arranged to form more uniform pores.

In addition, the fabrication method my further include a step of drying the sheet after the step of forming micropores. The process of drying the sheet may be carried out at a temperature of 40 °C to 80 °C for 10 to 30 hours. For example, the sheet may be dried out at a temperature of 50 °C to 70 °C for 20 to 30 hours. This drying process can eliminate the dispersion solution from the cellulose nanofibers to leave pores in the empty portions after removal of the dispersion solution. The process of drying the sheet may include, if not limited to, conducting the dehydration and drying process using a vacuum filtration system.

The present invention also provides a secondary battery including the aforementioned separator. The structure of the secondary battery is not specifically limited and may be applied to any type of battery, such as rectangular, cylindrical, pouch-like, or coin-like batteries. Further, the active material used for cathode and anode is not specifically limited. For example, the secondary battery may be a lithium secondary battery using lithium as an active material.

**EXAMPLES**

Hereinafter, the present invention will be described with reference to the examples, which are not intended to limit the scope of the present invention.

Example **1: Fabrication of Separator Including Cellulose Nanofibers**

Cellulose nanofibers are mixed with a dispersion solvent. The used amount of the cellulose nanofibers is as given in Table 1. The dispersion solvent is prepared by mixing an organic solvent and water together at a mixing ratio of 95:5 (v/v). The mixture of the cellulose nanofibers and the dispersion solvent is passed through a homogenizer for 12 cycles to prepare a sheet. Subsequently, the sheet is dried out at 60 °C for 24 hours to fabricate a separator using the cellulose nanofibers.

The separator thus obtained and a celgard 2320 PP/PE/PP separator commercially available are measured in regards to air permeability, resistance, and ion conductivity. The measurement results are presented in Table 1.

[Table 1]

|  | Example | | | Comparative Example | | | |
|---|---|---|---|---|---|---|---|
|  | 1 | 2 | 3 | 1 | 2 | 3 | 4 |
| Nanofiber content (g) | 0.15 | 0.2 | 0.25 | 0.5 | 0.5 | 0.5 | Celgard 2320 |
| Mixing ratio (organic solvent: water) | 95:5 | 95:5 | 100:0 | 70:30 | 90:10 | 100:0 | |
| Gurley value | 496.4 | 549.8 | 680.4 | 4749.1 | 1045.8 | 1003.5 | 500 |
| Thickness ($\mu$m) | 17 | 18 | 18 | 26 | 22 | 21 | 20 |
| Resistance ($\Omega$) | 1.127 | 1.344 | 1.598 | 7.330 | 4.603 | 1.361 | 1.356 |
| Ion conductivity (mS/cm) | 0.750 | 0.666 | 0.695 | 0.151 | 0.280 | 0.410 | 0.734 |

As can be seen from Table 1, the Gurley value decreases with a decrease in the amount of the cellulose nanofibers from 0.20 g to 0.15 g. The air permeability increases with a decrease in the Gurley value. It can be therefore concluded that the air permeability greatly increases with a decrease in the used amount of the cellulose nanofibers. Particularly, the separator prepared using 0.15 g of cellulose nanofibers has a thickness 17 $\mu$m and is thus much thinner than the thickness of the celgard 2320 PP/PE/PP separator.

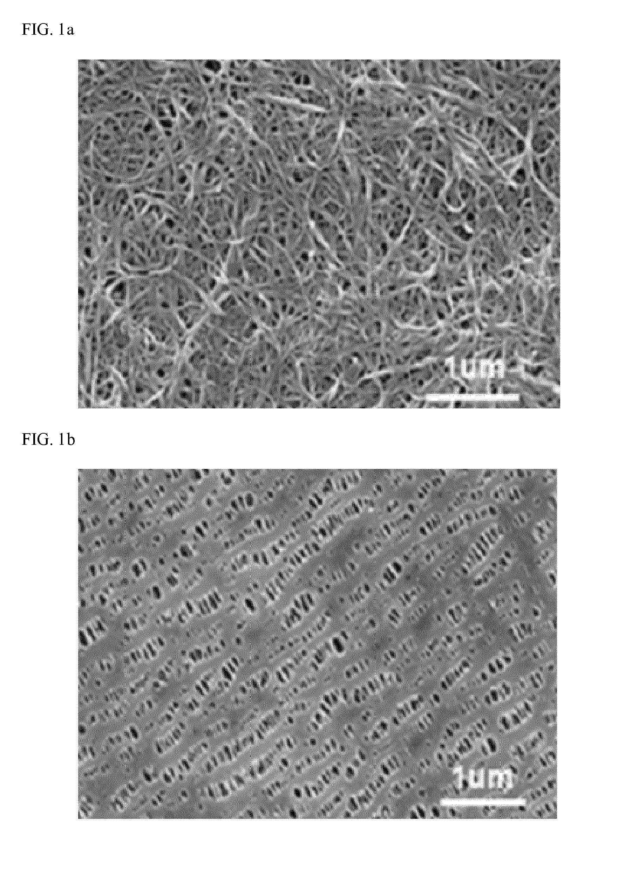

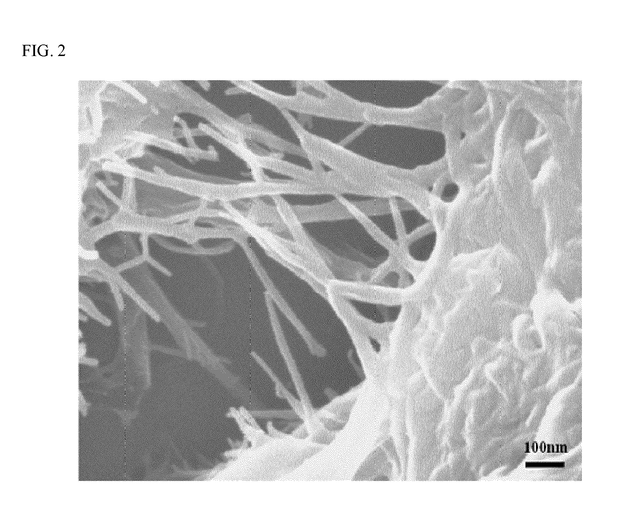

The separator thus obtained is observed with an electron scanning microscope (SEM). The results are presented in FIGS. 1a and 1b. A comparison between FIGS. 1a and 1b shows that there is a great difference in structure between the separator according to one embodiment of the present invention (FIG. 1a) and the celgard 2320 PP/PE/PP separator (FIG. 1b). The separator as illustrated in FIG. 1a has large-sized pores formed between the cellulose nanofibers and relatively uniform in distribution. FIG. 2 presents an enlarged image of the separator shown in FIG. 1a.

**Experimental Example 1: Measurement of Separator for Secondary Battery in Regards to Stability, Wettability, and Low-Voltage Characteristic**

(1) Measurement of Stability

The separator for secondary battery prepared in Example 1 is measured in regards to thermal stability and electrochemical stability.

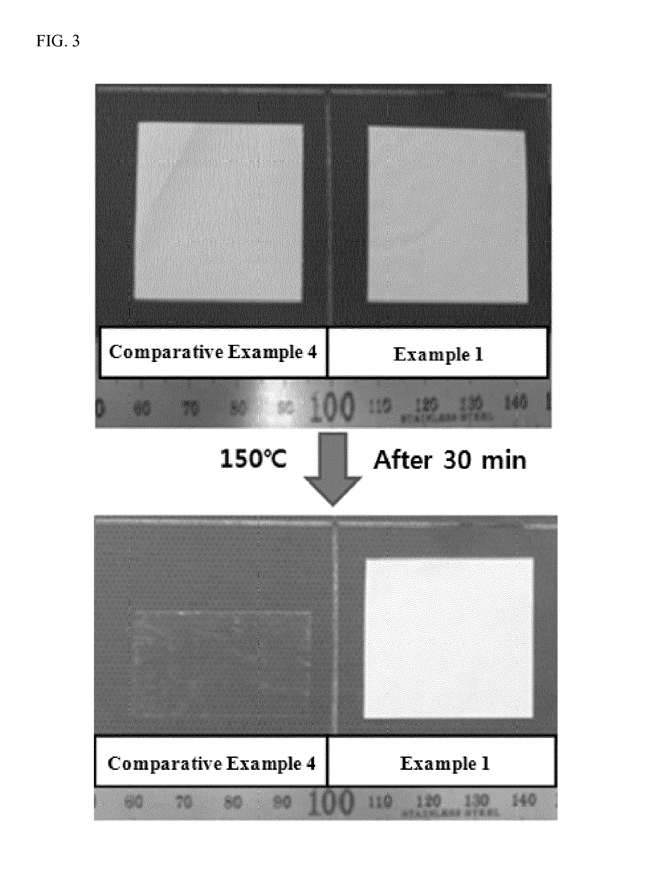

Firstly, the separator for secondary battery prepared in Example 1 and the celgard 2320 PP/PE/PP separator are exposed at 150 °C for 30 minutes. The images of the separators before and after the exposure at 150 °C are presented in FIG. 3. The celgard separator is reduced in dimension by about 36 % after the exposure at a temperature of 150 °C. In contrast, the separator of Example 1 has little change in dimension.

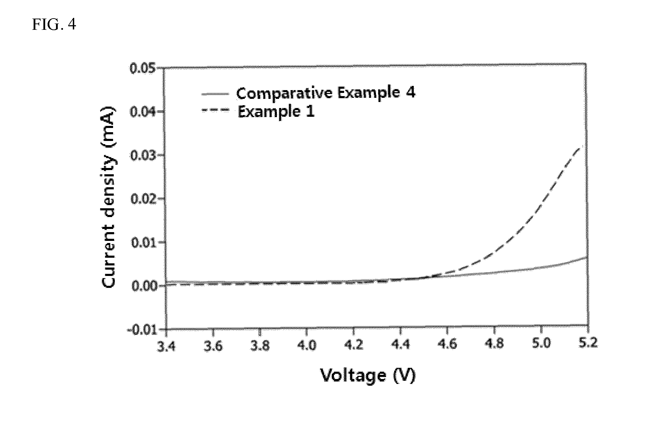

Subsequently, in order to evaluate the electrochemical stability, the respective separators are measured in regards to the current density while raising the voltage. The measurement results are presented in FIG. 4. Both separators have no abrupt change in the current density until the voltage is increased to about 4.6 V. This shows that there is no significant problem concerning the electrochemical stability, as the maximum voltage applied to the secondary battery is 4.2 V.

(2) Measurement of Wettability

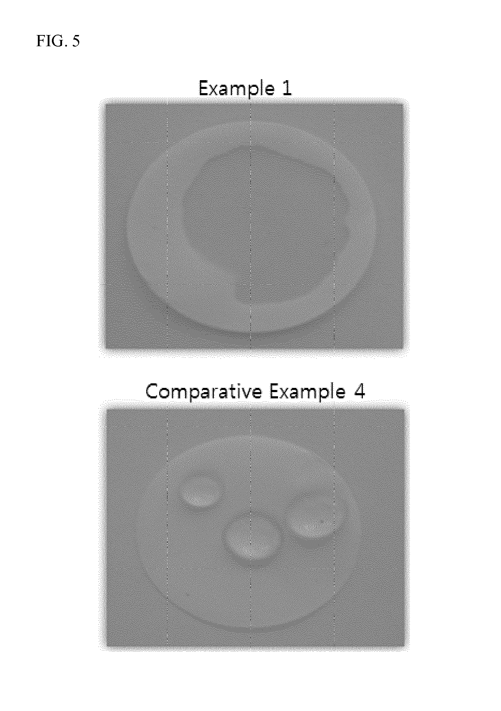

The wettability of the separator for secondary battery with respect to the electrolyte is one of the characteristics that have a great influence on the battery productivity and the battery efficiency. The separator of Example 1 and the celgard separator are measured in regards to the wettability with an electrolyte. A micro-syringe is used to add a highly polar propylene carbonate electrolyte dropwise to the separators, which are then observed. FIG. 5 shows the observation results two seconds after the addition of the propylene carbonate electrolyte. The celgard separator is not soaked with the electrolyte, while the separator of Example 1 becomes wet immediately after the dropwise addition of the electrolyte.

(3) Measurement of Low-Voltage Characteristic

A coin cell equipped with the separator is measured in regards to the low-voltage characteristic (i.e., open circuit voltage drop). The low-voltage characteristic provides information about the self-discharge, which makes it possible to predict the internal short circuit between the two electrodes of the secondary battery.

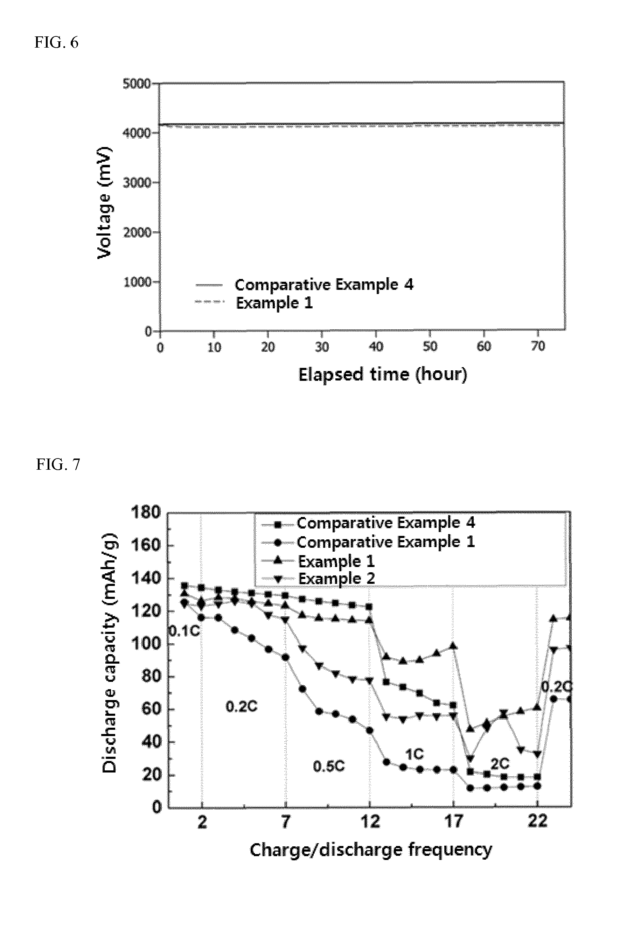

The coin cell is full charged with a current density of 0.5 C and a voltage of 4.2 V and then observed in change over time. The observation results are presented in FIG. 6. Referring to FIG. 6, the separator of Example 1 has a nearly similar level of low-voltage characteristic (open circuit voltage drop) to the celgard separator. This shows that the separator of the present invention is not inferior in the low-voltage characteristic (open circuit voltage drop) to the conventional separators.

The above-described measurement results concerning wettability and low-voltage characteristic (open circuit voltage drop) reveal that the separator for secondary battery according to the present invention has a well-developed pore structure in nanometer scale.

**Experimental Example 2: Measurement of Change in Discharge Capacity Depending on Change in Current Density of Separator for Secondary Battery**

The separators for secondary battery according to Examples 1 and 2 and Comparative Examples 1 and 4 as described in the example section are measured in regards to the change in the discharge capacity depending on the change in the current density.

Coin cells equipped with the individual separators are charged at a current density of 0.2 C and a voltage of 3.0 V and 4.2 V. Subsequently, the coin cells are discharged while the current density is varied from 0.1 C to 2.0 C, to measure the change in the discharge capacity of the coin cells.

The measurement results are presented in FIG. 7. Compared to the celgard separator of Comparative Example 4, the separator of Example 1 shows a similar discharge characteristic at a low-rate current density (0.1 C, 0.2C, or 0.5 C). But, the separator of Example 1 is superior in the discharge characteristic to the celgard separator of Comparative Example 4 at a high-rate current density (1C or 2 C). Compared to the separator of Comparative Example 4, the separator of Example 2 shows a tendency of having a somewhat lower discharge capacity but has a similar or more excellent discharge characteristic in the other intervals. Compared to the separators of Examples 1 and 2, the separator of Comparative Example 1 has a greater thickness. Further, the separator of Comparative Example 1 has a considerable deterioration in the discharge characteristic over the whole intervals.

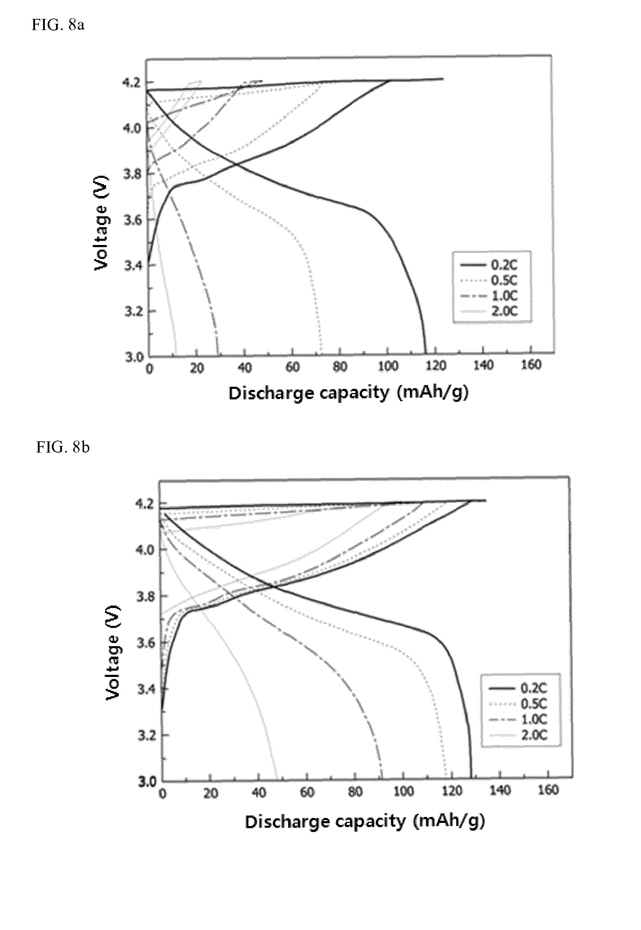

FIGS. 8a and 8b are graphs showing the charge/discharge characteristics of secondary batteries including the respective separators of Comparative Example 1 and Example 1. Compared to the separator of Example 1 (FIG. 8b), the separator of Comparative Example 1 (FIG. 8a) has the slope of the charge/discharge curve considerably fluctuating depending on the current density.

**INDUSTRIAL APPLICABILITY**

As described above, the separator for secondary battery including cellulose nanofibers and its fabrication method according to the present invention are useful in many different applications such as secondary batteries, or the like.

**Claims**

1.  A separator for secondary battery comprising cellulose nanofibers and having an air permeability (Gurley value) of 10 to 1,000 sec/100cc·air.

2.  The separator for secondary battery as claimed in claim 1, wherein the separator comprises a porous structure of micropores formed between the cellulose nanofibers, wherein the porous structure has a porosity of 10 to 80 % (v/v) and a pore size of 0.01 to 10 $\mu$m.

3.  The separator for secondary battery as claimed in claim 1, wherein the separator has a thickness of 5 to 30 $\mu$m.

4.  The separator for secondary battery as claimed in claim 1, wherein the cellulose nanofibers have an average diameter of 10 to 100 nm.

5.   The separator for secondary battery as claimed in claim 1, wherein the separator has an ion conductivity of 0.01 to 10 mS/cm when immersed in an electrolyte comprising a lithium salt and a carbonate-based solvent.

6.   A method for fabricating a separator for secondary batter comprising:

preparing a sheet using cellulose nanofibers and a solution comprising an organic solvent or a mixture of water and an organic solvent; and
eliminating the organic solvent from the sheet to form micropores.

7.   The method as claimed in claim 6, wherein the mixing ratio of the organic solvent to water is 50:50 (v/v) to 100:0 (v/v).

8.   The method as claimed in claim 6, wherein the organic solvent comprises at least one selected from the group consisting of methyl alcohol, ethyl alcohol, propyl alcohol, acetone, ethylacetate, methylethyleketone, toluene, and heptane.

9.   The method as claimed in claim 6, wherein the organic solvent is isopropyl alcohol.

10.   The method as claimed in claim 6, wherein the step of preparing a sheet comprises passing cellulose nanofibers and a solution comprising an organic solvent or a mixture of water and an organic solvent through a homogenizer to prepare a suspension and decompressing the suspension to prepare a sheet.

11.   The method as claimed in claim 10, wherein the cellulose nanofibers and the solution comprising an organic solvent or a mixture of water and an organic solvent are passed through the homogenizer for at least 8 cycles.

12.   The method as claimed in claim 6, further comprising:

drying the completed sheet after the step of forming micropores.

13.   A secondary battery comprising the separator as claimed in any one of claims 1 to 5.

14.   The secondary battery as claimed in claim 13, wherein the battery is a lithium secondary battery.

FIG. 1a

FIG. 1b

FIG. 2

FIG. 3

150°C    After 30 min

FIG. 4

FIG. 5

Example 1

Comparative Example 4

FIG. 6

FIG. 7

FIG. 8a

FIG. 8b

## INTERNATIONAL SEARCH REPORT

| International application No. |
| --- |
| **PCT/KR2011/009468** |

| A. | CLASSIFICATION OF SUBJECT MATTER |
| --- | --- |

**H01M 2/16(2006.01)i**

According to International Patent Classification (IPC) or to both national classification and IPC

| B. | FIELDS SEARCHED |
| --- | --- |

Minimum documentation searched (classification system followed by classification symbols)
H01M 2/16; H01M 4/48; H01M 4/60; H01M 10/0525; C23C 4/10; B32B 3/26

Documentation searched other than minimum documentation to the extent that such documents are included in the fields searched
Korean Utility models and applications for Utility models: IPC as above
Japanese Utility models and applications for Utility models: IPC as above

Electronic data base consulted during the international search (name of data base and, where practicable, search terms used)
eKOMPASS (KIPO internal) & Keywords: cellulose nano fiber, membrane, secondary battery

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | KR 10-1040572 B1 (LEE, JI HYEON et al.) 16 June 2011<br>See abstract, claims 1,2,4,6-11, paragraphs [0018-0042], figures 1,8 | 1-14 |
| A | US 2009-0241496 A1 (PINTAULT BRUNO et al.) 01 October 2009<br>See abstract, claim 38, paragraphs [0072-0092], figure 4 | 1-14 |
| A | KR 10-0907486 B1 (KIM, IL DOO et al.) 13 July 2009<br>See abstract, claim 1, figures 1,2 | 1-14 |

☐ Further documents are listed in the continuation of Box C. ☒ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| 23 NOVEMBER 2012 (23.11.2012) | **26 NOVEMBER 2012 (26.11.2012)** |

| Name and mailing address of the ISA/KR<br>Korean Intellectual Property Office<br>Government Complex-Daejeon, 189 Seonsa-ro, Daejeon 302-701,<br>Republic of Korea<br>Facsimile No. 82-42-472-7140 | Authorized officer<br><br>Telephone No. |
| --- | --- |

Form PCT/ISA/210 (second sheet) (July 2009)

**INTERNATIONAL SEARCH REPORT**
Information on patent family members

International application No.

**PCT/KR2011/009468**

| Patent document cited in search report | Publication date | Patent family member | Publication date |
|---|---|---|---|
| KR 10-1040572 B1 | 16.06.2011 | NONE | |
| US 2009-0241496 A1 | 01.10.2009 | EP 2010308 A1 | 07.01.2009 |
| | | FR 2900351 A1 | 02.11.2007 |
| | | JP 2009-534183 A | 24.09.2009 |
| | | US 8137442 B2 | 20.03.2012 |
| | | WO 2007-122256 A1 | 01.11.2007 |
| KR 10-0907486 B1 | 13.07.2009 | WO 2010-002084 A1 | 07.01.2010 |

Form PCT/ISA/210 (patent family annex) (July 2009)